# EUROPEAN PATENT APPLICATION

(11) **EP 2 104 314 A1**
(43) Date of publication of application: **23.09.2009**
(21) Application number: 08290251.1
(22) Date of filing: 17.03.2008
(51) Int. Cl.: H04L 29/08, H04L 29/06

(54) **Optimized execution of orchestration scripts in a network of service enablers**

(71) Applicant: Alcatel Lucent, 75008 Paris (FR)
(72) Inventor: Maas, Gerard, 2650 Edegem (BE); Dhillon, Tegbir Singh, 1200 Brussels (BE)
(74) Representative: Kohler Schmid Möbus

(57) **Abstract**

The invention relates to a method for executing an orchestration script (3) of an orchestrated service in a network (1) of distributed service enablers (EP, EC, EM), the orchestrated service being controlled by a central orchestration engine (2), the method comprising: transferring sub-scripts (SP, SC) extracted from the orchestration script (3) from the central orchestration engine (2) to the service enablers (EP, EC), and executing the sub-scripts (SP, SC) in the service enablers (EP, EC), the execution of the sub-scripts (SP, SC) being coordinated by the central orchestration engine (2).

## Description

### Background of the Invention

The invention relates to a method for executing an orchestration script of an orchestrated service in a network of distributed service enablers, wherein the orchestrated service is controlled by a central orchestration engine, as well as to a computer program product for performing the method. The invention further relates to a central orchestration engine for controlling an orchestrated service by executing an orchestration script in a network of distributed service enablers, and to a network, in particular an Internet Protocol Multimedia Subsystem, IMS, network, comprising such a central orchestration engine.

A service orchestration is the process of coordinating the execution of logic and exchange of information through an often graphically scripted control logic that makes use of high-level functional interfaces available on the different participants of the process. The high level of the interactions and the graphical nature of orchestration scripts make them very valuable to dramatically reduce the time to create new services based on available functional interfaces. Those services are then deployed in orchestration engines that take care of the triggering and execution of such services.

Orchestration-based solutions are implemented using a centralized orchestration engine that coordinates the activities of the different participants in a given service interaction. The execution of each step involves a round trip to the target participant, where said interface is called with a service request. Another realization of the state of the art, known as choreography, bases its approach in a distributed environment where multiple nodes are able to execute orchestrations. The choreography definition describes the message exchange pattern observable between participants in a service execution, but lacks any control on the actual logic executed on each node.

Solutions involving centralized orchestration engines introduce too much overhead in the execution of a service due to the fact that each execution step potentially involves a round trip to an external node for the actual execution of the logic. Orchestration technology is often used to define long lasting enterprise processes where this overhead is negligible with relation to the overall service execution. Thus, although the orchestration technology brings high value in the reduction of time-to-market of new services, it is currently regarded that it is not suited for the definition of time critical services and existing solutions based on centralized hubs introduce high costs associated to networking and encoding overhead (XML over HTTP).

### Object of the Invention

It is the object of the invention to provide: a method, a computer program product for implementing the method, a central orchestration engine, and a network comprising such a central orchestration engine, all of which allow to execute time critical services, in particular telecom services.

### Summary of the Invention

This object is achieved by a method as described above, comprising: transferring sub-scripts extracted from the orchestration script from the central orchestration engine to the service enablers, and executing the sub-scripts in the service enablers, the execution of the sub-scripts being coordinated by the central orchestration engine.

An orchestration script describes the execution logic of a service from a centralized perspective, providing a good and simplified overview of the steps needed to be executed by such a service. The orchestration script can be regarded as a sequence of nodes and transitions, forming a directed graph of the service logic. Each orchestration node that interacts with an external service enabler can be labeled with the target destination. Based on the destination labels, sub-graphs from the original orchestration scripts can be identified. These sub-graphs are extracted from the original orchestration script and transformed in a self-contained orchestration definition, providing a well-known interface towards an external system.

Assuming the availability of an embedded orchestration engine in the enabler nodes, the sub-graphs can be distributed to the target enablers where the accessed functions are natively available. After this optimization process, the original orchestration script is transformed into a skeleton that coordinates the message interactions between the sub-orchestrations hosted in the different service enablers. As the sub-graphs are now localized on the host where the required enabling functions are available, they can execute locally without any communication overhead, therefore highly lowering latency and increasing the responsiveness of the service.

In such a way, the invention allows to use the orchestration technology to develop and execute time critical services in a service network containing multiple serving nodes with specific capabilities such as, for example, enablers in an IMS (IP multimedia subsystem) network.

In a preferred variant, the sub-scripts to be extracted from the orchestration script are selected by identifying orchestration nodes in the orchestration script which interact with the same service enabler, each of the extracted sub-scripts preferably comprising at least two orchestration nodes interacting with the service enabler to which the extracted sub-script is transferred. In case that only a single operation corresponding to a single orchestration node is performed in the service enabler, the optimization process cannot be further optimized, such that only sub-scripts containing two or more orchestration nodes are usually transferred to the service enablers. The person skilled in the art will appreciate that an orchestration node which is contained in a loop of the orchestration script and which is therefore executed more than once will not be counted as a single node and will consequently be transferred to the service enabler, usually together with the commands of the orchestration script which define the loop.

In another advantageous variant, each extracted sub-script is replaced by a new orchestration node in the orchestration script of the central orchestration engine, the new orchestration node interacting with the service enabler to which the extracted sub-script has been transferred for executing the transferred sub-script. In such a way, the central orchestration engine may still coordinate the execution of the distributed parts of the orchestration script, the results of the executed sub-scripts being provided to the new orchestration nodes.

Preferably, the method further comprises installing an orchestration engine for executing orchestration scripts on the service enablers. Typically, a software for executing orchestration scripts is distributed and installed on the service enablers before the start of the execution of the orchestration script, such that the sub-scripts distributed to the service enablers can be executed without delay. In case that the service enablers are enablers of an IMS network, the installation of an orchestration engine is particularly simple.

In another highly preferred variant, the interaction between the central orchestration engine and the service enablers is performed using the internet protocol. Orchestration is in general performed between distributed entities of a computer network such as a NGN / IMS network, the communication between these distributed entities (central orchestration engine and service enablers) being typically performed using the IP protocol.

A second aspect of the invention is implemented in a central orchestration engine as described above, comprising: a transfer unit for transferring sub-scripts extracted from the orchestration script to the service enablers, the central orchestration engine being adapted to coordinate the execution of the sub-scripts in the service enablers. For this purpose, the central orchestration engine executes a skeleton of the original orchestration script which contains orchestration nodes for communicating with the service enablers in order to coordinate the execution of the different sub-scripts.

In a preferred embodiment, the central orchestration engine further comprises a selection unit for selecting sub-scripts to be extracted from the orchestration script by identifying orchestration nodes in the orchestration script which interact with the same service enabler, each extracted sub-script preferably comprising at least two orchestration nodes interacting with the service enabler to which the extracted sub-script is transferred. Typically, sub-scripts comprising at least two orchestration nodes of the directed graph which constitutes the orchestration script and which are executed either subsequently or in parallel and are transferred to the service enabler with which they interact. In such a way, the services which are made available by the that service enabler may be directly invoked by the orchestration nodes having been transferred to that service enabler.

In a highly preferred embodiment, the central orchestration engine further comprises a replacement unit for replacing each extracted sub-script of the orchestration script by a new orchestration node, the new orchestration node interacting with the service enabler to which the extracted sub-script has been transferred for executing the transferred sub-script. In such a way, the coordination of the distributed sub-scripts is relegated to the central orchestration engine which executes a skeleton of the original orchestration script in which the transferred sub-scripts are replaced by the new orchestration nodes.

A third aspect of the invention is implemented in a network, in particular in an Internet Protocol Multimedia Subsystem, IMS, network, comprising: a central orchestration engine as described above, and at least one service enabler comprising an orchestration engine for executing a sub-script of the orchestration script transferred to the service enabler by the central orchestration engine. The orchestration scripts may be implemented in an orchestration language such as BPEL (Business Process Execution Language) which is used for specifying business process behavior based on Web Services. BPEL is an XML (extensible markup language) based language which interacts with web services using WSDL (Web Services Definition Language). Thus, the central orchestration engine may communicate with web services being used as service enablers in a computer network such as the internet.

A fourth aspect of the invention is implemented in a computer program product comprising code means for performing all the steps of the method described above. The computer program product may be typically implemented as a software program, however, as is the case with almost all computer program products, it is also possible to implement certain parts of it or the whole program in a suitable hardware component such as an ASIC. The person skilled in the art will also appreciate that the units of the central orchestration engine which have been referred to above may be implemented as specific functions of a suitable software.

Further features and advantages are stated in the following description of exemplary embodiments, with reference to the figures of the drawing, which shows significant details, and are defined by the claims. The individual features can be implemented individually by themselves, or several of them can be implemented in any desired combination.

### Brief Description of the Drawings

Exemplary embodiments are shown in the diagrammatic drawing and are explained in the description below. The following are shown:
- Fig. 1: a computer network with a central orchestration engine to which an initial orchestration script for organizing a call conference setup is provided,
- Fig. 2: the network of Fig. 1 with orchestration nodes being classified according to their interaction with specific service enablers for identifying sub-scripts to be transferred to these service enablers, and
- Fig. 3: an optimized distribution of sub-scripts of the orchestration script to the service enablers.

### Detailed Description of Preferred Embodiments

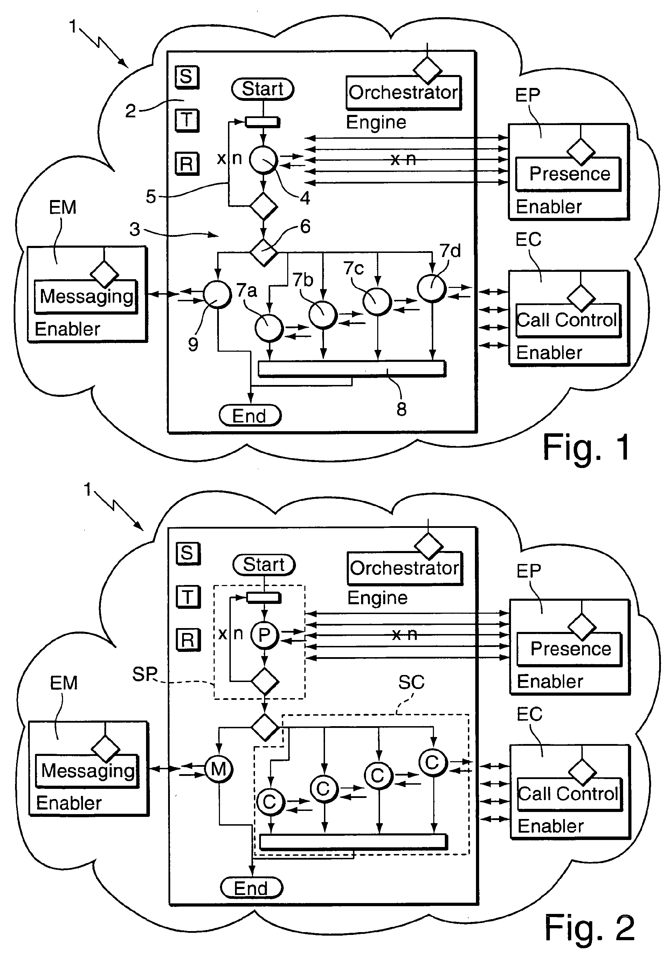

Fig. 1 shows an IMS network 1 comprising a central orchestration engine 2 and a set of three distributed service enablers, namely a presence enabler EP, a messaging enabler EM, and a call control enabler EC, in an initial state where the central orchestration engine 2 receives a new orchestration script 3 as an orchestrated service for implementing a conference call setup based on the availability of the participants, the steps of which will be described in the following. The orchestration script 3 is based on an orchestration language such as BPEL which is itself based on XML.

In an initial step, the presence of the people to be invited to the conference is checked by accessing the presence enabler EP interface through an IP protocol communication from a first orchestration node 4 for each of the number n of participants. The orchestration node 4 is arranged in a loop 5 and thus communicates with the first service enabler EP a total number of n times.

In a second step, a decision point 6 checks the result of the previous step and in case that all invited people are present, the orchestration proceeds to invite each one of them in parallel to the conference using the call control enabler EC, the communication being performed in parallel using further orchestration nodes 7a to 7d. A scheduler 8 collects the responses from each of the invited participants and sets up the conference call as soon as all participants are available. In case that the presence check process at the decision point 6 is negative, the orchestration script 3 proceeds to another orchestration node 9 which communicates with the messaging enabler EM for sending a message to the owner of the conference to inform him of the failure. In either case, the orchestration is terminated and the conference call setup comes to an end.

For distributing sub-scripts of the orchestration script 3 of Fig. 1 to the service enablers EP, EC, EM, a selection unit S shown in Fig. 2 is provided in the central orchestration engine 2. The selection unit S identifies the orchestration nodes 4, 7a to 7d, 9 of the orchestration script 3 which interact with the same service enabler EP, EC, EM, the different nodes 4, 7a to 7d, 9 being labeled in Fig. 2 with different letters P, C, and M, respectively, representing the different enabling functions that are available in the different hosts EP, EC, EM of the service network 1. This identification step is the basis to optimize the break down of the centralized orchestration script 3 into sub-graphs / sub-scripts. Fig. 2 shows two sub-scripts SP, SC which have been selected by the selection unit S for a transfer to the corresponding service enablers EP and EC, respectively.

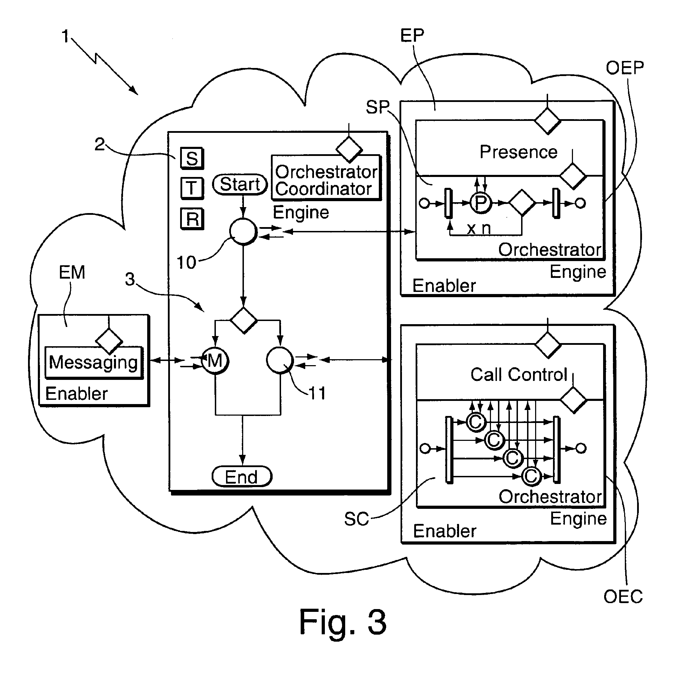

For the purpose of executing parts of the orchestration script in the service enablers, usually each native IMS enabler such as the Location, Presence, Call Control enabler etc. has the embedded capacity (orchestration software /engine) to execute an orchestration script. Fig. 3 shows two such orchestration engines OEP, OEC installed on the presence enabler EP and on the call control enabler EC, respectively, for executing orchestration scripts.

Fig. 3 also shows the two sub-scripts SP, SC of Fig. 2 which have been extracted from the original orchestration script 3 and which have been transferred from the central orchestration engine 2 to the presence enabler EP and to the call control enabler EC by a transfer unit T. The sub-scripts SP, SC are encapsulated with a well-defined external interface and deployed in the distributed orchestration containers of the orchestration engines OEP, OEC where they can locally access the enabler functionality without network or encoding overhead.

Each of the sub-scripts SP, SC which has been extracted and transferred from the central orchestration engine 2 to the service enablers EP, EC has been replaced by a new orchestration node 10, 11 in the central orchestration engine 2. The new orchestration nodes 10, 11 interact with the service enablers EP, EC to which the extracted sub-scripts SP, SC have been transferred for executing the transferred sub-scripts SP, SC. In such a way, the original orchestration script 3 of Fig. 1 is now reduced to a high-level flow that coordinates the interaction between the different orchestration participants, taking the results provided from the executed sub-scripts SP, SC into account.

In the optimizing and distribution process described above, the access to the messaging enabler EM has not been optimized, as it is a single operation and typically only sub-scripts comprising at least two orchestration nodes interacting with the same service enabler are transferred from the central orchestration engine to that service enabler.

The person skilled in the art will appreciate that the invention is not limited to the simple orchestration script which has been described above and may be applied to more complex orchestration scripts. Also, service enablers of other types as those described above may be used in dependence on the orchestrated service.

In summary, by introducing a new node (centralized orchestration engine 2) in the network 1 which is able to process the centralized orchestration definitions by following the process described above and to distribute them to the different network enablers EP, EC, the inter-enabler communication can be drastically reduced, the communication being limited to the issuing of coordination requests and reception or responses from the different distributed sub-scripts SP, SC. In that way, the added value of orchestration, such as reuse of functionality and fast development of new services, can be brought to time critical domains such as the telecom domain.

The above description of the preferred embodiments has been given by way of example. From the disclosure given, those skilled in the art will not only understand the present invention and its attendant advantages, but will also find apparent various changes and modifications to the structures and methods disclosed. The applicant seeks, therefore, to cover all such changes and modifications as fall within the spirit and scope of the invention, as defined by the appended claims, and equivalents thereof.

## Claims

1. Method for executing an orchestration script (3) of an orchestrated service in a network (1) of distributed service enablers (EP, EC, EM), the orchestrated service being controlled by a central orchestration engine (2), the method comprising:
transferring sub-scripts (SP, SC) extracted from the orchestration script (3) from the central orchestration engine (2) to the service enablers (EP, EC), and
executing the sub-scripts (SP, SC) in the service enablers (EP, EC), the execution of the sub-scripts (SP, SC) being coordinated by the central orchestration engine (2).

2. Method according to claim 1, wherein the sub-scripts (SP, SC) to be extracted from the orchestration script (3) are selected by identifying orchestration nodes (4; 7a to 7d; 9) in the orchestration script (3) which interact with the same service enabler (EP; EC; EM), each of the extracted sub-scripts (SP, SC) preferably comprising at least two orchestration nodes (4; 7a to 7d) interacting with the service enabler (EP, EC) to which the extracted sub-script (SP, SC) is transferred.

3. Method according to claim 1, wherein each extracted sub-script (SP, SC) is replaced by a new orchestration node (10, 11) in the orchestration script (3) of the central orchestration engine (2), the new orchestration node (10, 11) interacting with the service enabler (EP, EC) to which the extracted sub-script (SP, SC) has been transferred for executing the transferred sub-script (SP, SC).

4. Method according to claim 1, further comprising: installing an orchestration engine (OEP, OEC) for executing orchestration scripts (SP, SC) on the service enablers (EP, EC).

5. Method according to claim 1, wherein the interaction between the central orchestration engine (2) and the service enablers (SP, SC) is performed using the internet protocol.

6. Central orchestration engine (2) for controlling an orchestrated service by executing an orchestration script (3) in a network (1) of distributed service enablers (EP, EC, EM), comprising:
a transfer unit (T) for transferring sub-scripts (SP, SC) extracted from the orchestration script (3) to the service enablers (EP, EC), the central orchestration engine (2) being adapted to coordinate the execution of the sub-scripts (SP, SC) in the service enablers (EP, EC).

7. Central orchestration engine, further comprising a selection unit (S) for selecting sub-scripts (SP, SC) to be extracted from the orchestration script (3) by identifying orchestration nodes (4; 7a to 7d; 9) in the orchestration script (3) which interact with the same service enabler (EP, EC), each extracted sub-script (SP, SC) preferably comprising at least two orchestration nodes (4; 7a to 7d) interacting with the service enabler (EP, EC) to which the extracted sub-script (SP, SC) is transferred.

8. Central orchestration engine, further comprising a replacement unit (R) for replacing each extracted sub-script (SP, SC) of the orchestration script (3) by a new orchestration node (10, 11), the new orchestration node (10, 11) interacting with the service enabler (EP, EC) to which the extracted sub-script (SP, SC) has been transferred for executing the transferred sub-script (SP, SC).

9. Network (1), in particular Internet Protocol Multimedia Subsystem, IMS, network, comprising:
a central orchestration engine (2) according to claim 6, and at least one service enabler (EP, EC) comprising an orchestration engine (OEP, OEC) for executing a sub-script (SP, SC) of the orchestration script (3) transferred to the service enabler (EP, EC) by the central orchestration engine (2).

10. Computer program product comprising code means for performing all the steps of the method according to claim 1.

## Amended claims

### Amended claims in accordance with Rule 137(2) EPC.

**1.** Method for executing an orchestration script (3) of an orchestrated service in a network (1) of distributed service enablers (EP, EC, EM), the orchestrated service being controlled by a central orchestration engine (2), the orchestration script (3) forming a directed graph of orchestration nodes (4; 7a to 7d) and transitions, the method comprising:
transferring sub-scripts (SP, SC) extracted from the orchestration script (3) from the central orchestration engine (2) to the service enablers (EP, EC), and
executing the sub-scripts (SP, SC) in the service enablers (EP, EC), the execution of the sub-scripts (SP, SC) being coordinated by the central orchestration engine (2),
**characterized in that**
the sub-scripts (SP, SC) to be extracted from the orchestration script (3) are selected by identifying orchestration nodes (4; 7a to 7d; 9) in the orchestration script (3) which interact with the same service enabler (EP; EC; EM), each of the extracted sub-scripts (SP, SC) preferably comprising at least two orchestration nodes (4; 7a to 7d) interacting with the service enabler (EP, EC) to which the extracted sub-script (SP, SC) is transferred.

**2.** Method according to claim 1, wherein each extracted sub-script (SP, SC) is replaced by a new orchestration node (10, 11) in the orchestration script (3) of the central orchestration engine (2), the new orchestration node (10, 11) interacting with the service enabler (EP, EC) to which the extracted sub-script (SP, SC) has been transferred for executing the transferred sub-script (SP, SC).

**3.** Method according to claim 1, further comprising: installing an orchestration engine (OEP, OEC) for executing orchestration scripts (SP, SC) on the service enablers (EP, EC).

**4.** Method according to claim 1, wherein the interaction between the central orchestration engine (2) and the service enablers (SP, SC) is performed using the internet protocol.

**5.** Central orchestration engine (2) for controlling an orchestrated service by executing an orchestration script (3) in a network (1) of distributed service enablers (EP, EC, EM),), the orchestration script (3) forming a directed graph of orchestration nodes (4; 7a to 7d) and transitions, the central orchestration engine (2) comprising:
a transfer unit (T) for transferring sub-scripts (SP, SC) extracted from the orchestration script (3) to the service enablers (EP, EC), the central orchestration engine (2) being adapted to coordinate the execution of the sub-scripts (SP, SC) in the service enablers (EP, EC),
**characterized by**
a selection unit (S) for selecting sub-scripts (SP, SC) to be extracted from the orchestration script (3) by identifying orchestration nodes (4; 7a to 7d; 9) in the orchestration script (3) which interact with the same service enabler (EP, EC), each extracted sub-script (SP, SC) preferably comprising at least two orchestration nodes (4; 7a to 7d) interacting with the service enabler (EP, EC) to which the extracted sub-script (SP, SC) is transferred.

**6.** Central orchestration engine according to claim 5, further comprising a replacement unit (R) for replacing each extracted sub-script (SP, SC) of the orchestration script (3) by a new orchestration node (10, 11), the new orchestration node (10, 11) interacting with the service enabler (EP, EC) to which the extracted sub-script (SP, SC) has been transferred for executing the transferred sub-script (SP, SC).

**7.** Network (1), in particular Internet Protocol Multimedia Subsystem, IMS, network, comprising:
a central orchestration engine (2) according to claim 5, and
at least one service enabler (EP, EC) comprising an orchestration engine (OEP, OEC) for executing a sub-script (SP, SC) of the orchestration script (3) transferred to the service enabler (EP, EC) by the central orchestration engine (2).

**8.** Computer program product comprising code means for performing all the steps of the method according to claim 1.
